Europäisches Patentamt

European Patent Office

Office européen des brevets

(11) Veröffentlichungsnummer: **0 188 809**
**A1**

(12) # EUROPÄISCHE PATENTANMELDUNG

(21) Anmeldenummer: **85116509.2**

(51) Int. Cl.⁴: **C 09 J 3/00**

(22) Anmeldetag: **23.12.85**

(30) Priorität: **07.01.85 DE 3500283**

(43) Veröffentlichungstag der Anmeldung: **30.07.86**
**Patentblatt 86/31**

(84) Benannte Vertragsstaaten: **AT BE CH DE FR GB IT LI LU NL SE**

(71) Anmelder: **Henkel Kommanditgesellschaft auf Aktien, Postfach 1100 Henkelstrasse 67, D-4000 Düsseldorf-Holthausen (DE)**

(72) Erfinder: **Dierichs, Wolfgang, Dr., Im Diepental 11, D-4000 Düsseldorf 13 (DE)**
Erfinder: **Gierenz, Gerhard, Dr., Dieselstrasse 70, D-5650 Solingen 19 (DE)**
Erfinder: **Kraus, Gabriella, Ulmenallee 140, D-4040 Neuss 21 (DE)**

(54) **Klebestift.**

(57) Stabile, weichabreibbare Klebestifte, die eine dauerklebrige, wieder trennbare Klebeschicht liefern, bestehend aus einem formstabilen Gel aus dem Natriumsalz einer aliphatischen Monocarbonsäure mit 8 bis 22, insbesondere 14 bis 18 Kohlenstoffatomen in Wasser, gegebenenfalls unter Zusatz von mit Wasser mischbaren organischen Lösungsmitteln als Gerüstsubstanz und wasserlöslichen mit Seifengel verträglichen Klebstoffen, wobei bezogen auf 100 Gewichtsteile des wasserlöslichen Klebstoffs 80 bis 400 Gewichtsteile, insbesondere 100 bis 300 Gewichtsteile eines wasserlöslichen Polyetherglykols einer Molekularmasse zwischen etwa 250 und 2000 (Zahlenmittel) vorhanden sind. Als wasserlösliche Klebstoffe sind Polyvinylalkohol, Dextrin, wasserlösliche Celluloseether, insbesondere heißwasserlösliche nichtionogene Celluloseether und/oder Polyvinylpyrrolidon enthalten. Die Stifte werden in bekannter Weise durch Mischen der Komponente unter Erwärmung und Erkaltenlassen in Hülsen hergestellt.

ACTORUM AG

Henkelstraße 67

4000 Düsseldorf, den  4. Januar 1985          Dr.SchOe/Ge


Patentanmeldung

D 7250 EP

"Klebestift"


Die vorliegende Erfindung betrifft dauerklebrige Klebstoffe in Stiftform, die weichabreibbar auf verschiedenste Oberflächen aufgetragen werden können und zu wieder
trennbaren Verklebungen führen.


Seit geraumer Zeit sind aus der Literatur, insbesondere
der Patentliteratur, die verschiedenartigsten Klebestifte
bekannt geworden. Die Art, welche in der Praxis sich
weitgehend durchgesetzt hat, besteht  aus einem formstabilen Gel von Alkali-bzw. Ammoniumsalzen aliphatischer Monocarbonsäuren mittlerer Kettenlänge sowie Wasser
und wassermischbaren organischen Lösungsmitteln und
wasserlöslichen Klebstoffen, insbesondere Polyvinylpyrrolidon als Klebstoff. Weiterhin ist es bekannt,
Klebestifte herzustellen, bei denen die Aktivierung
durch Abreiben und Freisetzen von organischen eingekapselten Lösungsmitteln bewirkt wird oder aber einfach
durch die beim Aufreiben erzeugte Wärme zur Sensivitierung
der Klebstoffmasse führt.


Gemeinsam ist allen diesen Klebestiften, daß die damit
hergestellten Verklebungen, insbesondere bei Papier
zu einer verfilzenden oder bei glatten Oberflächen
zu einer Festverklebung führen. Der gebildete Klebefilm
erfährt eine Härtung und beim Trennen der verklebten
Oberflächen kann man diese nicht mehr ohne erneute Zu-

...

0188809
HENKEL KGaA
ZR-FE/Patente

führung von Klebstoff wieder miteinander verbinden.

Aufgabe der vorliegenden Erfindung war es daher, solche formstabilen Klebestifte zu finden, die nicht nur leicht auf die Unterlagen aufgetragen werden können, sondern nach dem Auftrag eine dauerklebrige Schicht erzeugen, die nach Durchführung der Verklebung später wieder getrennt und durch erneutes Zusammendrücken wieder zu einer Verklebung führt. Derartige Klebstoffe sind an sich bekannt, konnten jedoch bisher nicht in Stiftform konfektioniert werden.

Erfindungsgegenstand ist ein formstabiler, weichabreibbarer Klebestift, der eine dauerklebrige wieder trennbare Klebschicht liefert, bestehend aus einem formstabilen Gel aus dem Natriumsalz einer aliphatischen Monocarbonsäure mit 8 bis 22, insbesondere 14 bis 18 Kohlenstoffatomen in Wasser, gegebenenfalls unter Zusatz von mit wassermischbaren organischen Lösungsmitteln als Gerüstsubstanz und wasserlöslichen mit Seifengel verträglichen Klebstoffen sowie gegebenenfalls üblichen Hilfsstoffen, wobei bezogen auf 100 Gewichtsteile des wasserlöslichen Klebstoffs zusätzlich 80 bis 400 Gewichtsteile, insbesondere 100 bis 300 Gewichtsteile eines wasserlöslichen Polyetherglykols einer Molekularmasse zwischen etwa 250 und 2 000 (Zahlenmittel) vorhanden sind.

Aus der deutschen Patentschrift 18 17 985 kann zwar der Hinweis entnommen werden, als Hilfsstoff bei Klebestiften auf Basis vom sogenannten Seifengel und Polyvinylpyrrolidon niedermolekulares Polyethylenglykol mit einem Molekulargewicht bis zu etwa 4 000 mitzuverwenden. Eine Mengenangabe ist dieser Veröffentlichung nur aus den Beispielen zu entnehmen, nach denen man auf 32 Gewichtsteile Polyvinylpyrrolidon 10 bis 14 Gewichtsteile ethoxylierte Glukose einsetzen kann. Über die Wirkung derartiger

. . .

0188809
HENKEL KGaA
ZR-FE/Patente

Ethoxylate ist diesem Stand der Technik zu entnehmen, daß sie als Weichmacher oder Feuchthalter dienen können. Derartige Verbindungen sollen in untergeordneten Mengen eingesetzt werden. Ferner ist die Begrenzung auf geringe Mengen aus der ausdrücklichen Forderung zu entnehmen, daß diese Verbindungen nur für den leichten, weichen Abrieb dienlich sein sollen, wobei selbstverständlich die gewünschte Festverklebung nicht beeinträchtigt werden darf.

Daher muß es als überraschend angesehen werden, daß man bei Einsatz der erfindungsgemäßen größeren Mengen an wasserlöslichen Polyetherglykolen von einem zu einer festen Klebung führenden formstabilen Klebestift unter Beibehaltung der Stabilität der Form einen neuartigen Stift erhält, der den Auftrag einer dauerklebrigen Schicht erlaubt.

Als Klebstoffe sind prinzipiell alle derartigen mit Seifengel verträglichen wasserlöslichen und Klebeschichten bildenden Klebstoffe synthetischer wie natürlicher Herkunft geeignet. Eine bevorzugte Gruppe enthält Polyvinylpyrrolidone und Polyvinylalkohole der handelsüblichen Art, welcher bis zu 40 % an nicht verseiften Acetatgruppen enthalten kann sowie wasserlösliche Celluloseether, insbesondere nichtionogene heißwasserlösliche Celluloseether wie Hydroxyethylcellulose oder auch Hydroxyethylpropoxypropylcellulose oder Hydroxyethylmethylcellulose und schließlich Dextrin.

Natürlich ist die Menge des einzusetzenden wasserlöslichen Polyetherpolyols abhängig von dem eingesetzten Klebstoff. Wird Polyvinylpyrrolidon als Klebstoff verwendet, liegt die optimale Einsatzmenge etwa bei 100 bis 300 Gewichtsteilen Polyetherpolyol auf 100 Gewichtsteile des Polyvinylpyrrolidons. Das Polyvinylpyrrolidon kann K-Werte zwischen 30 und 90 haben, es sind also praktisch alle

...

handelsüblichen Sorten einsetzbar. Es hat sich als praktisch erwiesen, Gemische von Polyvinylpyrrolidonen verschiedener Molekularmassen, d.h. verschiedener K-Werte, einzusetzen. Auch kann es von Vorteil sein, die handelsüblichen wasserlöslichen Mischpolymerisate des Vinylpyrrolidons zu verwenden bzw. mitzuverwenden.

Die vorgenannten Klebstoffe können in beliebiger Abmischung mit Polyvinylpyrrolidon eingesetzt werden. Im Gegensatz zu den oben erwähnten Klebstoffgruppen eignen sich andere, im Prinzip als Klebstoffe bekannte wasserlösliche Polymere eher als Additive, die 1/4 der Mengen an den vorstehend erwähnten Klebstoffen, insbesondere des Polyvinylpyrrolidons nicht überschreiten sollen. In Betracht kommen Carboxymethylcellulose, Carboxymethylmethylcellulose, Hydroxyethylcarboxymethylcellulose und Gelatine sowie Kasein.

Unter den erfindungsgemäß einzusetzenden Polyetherglykolen sollen die wasserlöslichen, sich vom Ethylenglykol ableitenden verstanden werden. Im allgemeinen erhält man sie durch Addition von Ethylenoxid an Startermoleküle. Im einfachsten Fall wird als Startmolekül das Ethylenglykol selbst verwendet. Sofern die eingangs gestellten Rahmenbedingungen der Molekularmasse und der Wasserlöslichkeit erfüllt sind, können bei der Herstellung auch andere Alkylenoxide wie Propylenoxid und gegebenenfalls auch Butylenoxid in untergeordneter Menge mitverwendet werden. Die im wesentlichen Ethylenglykolsegmente enthaltenden Polyalkylenglykole sind im allgemeinen nicht nur wasserlöslich, sondern auch hygroskopisch. Sie zeichnen sich durch recht niedrige Dampfdrücke aus, welche bei 50 °C unterhalb von 100 mbar liegen. Meist werden diese Dampfdrücke jedoch ganz erheblich unterschritten und liegen unterhalb von 10 mbar bei 50 °C. Ihr Schmelzpunkt sollte 50 bis 60 °C nicht überschreiten.

. . .

Neben dem difunktionellen Ethylenglykol kann man auch anderen diprimären Alkoholen mit 3 bis etwa 18 C-Atomen als Startermoleküle sowie höherfunktionelle Alkohole verwenden. Hier kommen beispielsweise als trifunktionelle Alkohole Glycerin, Trimethylolpropan oder Trimethylolethan in Frage. Als mehrfunktionelle Alkohole sind Pentaerythrit, Sorbit, Mannit, die verschiedenen Alkylglukoside oder die Saccharose ebenso wie Triethanolamin geeignet. Aufgrund der starken zwischenmolekularen Kräfte bei den von mehrfunktionellen Startern ausgehenden hochverzweigten Polyethylenglykolen kann die Migration vermindert und die Beständigkeit der Klebeverbindung günstig beeinflußt werden. Unter der Vielzahl möglicher wasserlöslicher Polyethylenglykole können erfindungsgemäß auch solche eingesetzt werden, bei denen als Starter für die Ethylenoxidpolyaddition Fettalkohole oder Phenol sowie gegebenenfalls andere aktive Wasserstoffatome enthaltende Verbindungen wie Fettsäuren oder dergleichen verwendet werden. Ferner ist die Möglichkeit in Betracht zu ziehen die insbesondere endständigen Hydroxylgruppen der Ethylenoxidpolyaddukte in bekannter Weise zu verschließen etwa durch Reaktion unter Ether- oder Esterbildung oder durch Isocyanatmaskierung.

Zwecks Verminderung der Migration können neben den vorstehend erläuterten Polyethylenglykolen auch solche mit einer etwa 2 bis 3 10er-Potenzen höheren Molmasse in geringerer Menge mitverwendet werden, wobei 8 Gewichtsprozent, insbesondere aber 5 Gewichtsprozent, bezogen auf Festsubstanz (Klebstoff, Polyethylenglykol und Seife) nicht überschritten werden sollen.

Als gelbildende Monocarbonsäuren kommen prinzipiell alle für die Stiftbildung bekannten in Frage. Es hat sich jedoch als zweckmäßig erwiesen, solche mit einer geraden

• • •

Kohlenstoffzahl von 14 bis 18 einzusetzen, d.h. die Natriumsalze von Myristinsäure, Palmitinsäure, Stearinsäure oder auch Gemische dieser Salze. Sie sollen bevorzugt in einer Menge von 2 bis 6 Gewichtsprozent, bezogen auf den gesamten Klebestift als Gelbildner eingesetzt werden.

Zur Herstellung der erfindungsgemäßen Klebestifte verfährt man in an sich bekannter Weise, wie sie beispielsweise in der deutschen Patentschrift 18 17 895 beschrieben ist. Dazu mischt man die einzusetzenden Komponenten und erwärmt auf Temperaturen oberhalb von 60 $^\circ$C, insbesondere 80 $^\circ$C, unter Bildung einer optisch homogenen Masse und läßt diese ohne mechanische Beeinflussung unter Gelbildung abkühlen. Aus praktischen Erwägungen hat es sich als günstig erwiesen, die zur Herstellung des Klebestiftes notwendigen Komponenten auf Temperaturen zwischen 80 und 100 $^\circ$C zu erwärmen und die erhaltene homogene Masse in Hülsen abzufüllen und dort unter Gelbildung erkalten zu lassen. Durch geeignete Auswahl des gelbildenden Natriumsalzes von Monocarbonsäuren klebender Komponente sowie Polyetherglykolen und gegebenenfalls der weiteren Klebstoffe und Abstimmung der Mengenverhältnisse dieser Komponenten kann man dauerklebrige Haftschichten ergebende Stifte der gewünschten Konsistenz herstellen.

Nach einer praktischen Ausführung zur Herstellung legt man in einem geeigneten Rührgefäß das Wasser bzw. das wasserhaltige Lösungsmittel vor und löst darin das Polyetherpolyol und anschließend den einzusetzenden Klebstoff unter Rühren auf. Dann dispergiert man die Fettsäure, vorzugsweise eine Fettsäure mit 14 bis 18 Kohlenstoffatomen und setzt die etwa äquivalente Menge Natronlauge zu. Bei Temperaturen zwischen etwa 75 und 100 $^\circ$C bildet sich dann die Klebstoffmasse, welche in für Klebestifte bekannte Hülsen eingefüllt wird und dort erkaltet, so daß

...

0188809
HENKEL KGaA
ZR-FE/Patente

sich die Gelstruktur ausbilden kann. Selbstverständlich ist es auch möglich, anstelle der Fettsäure und der Natronlauge das vorgebildete Fettsäuresalz bzw. Gemische von Natriumsalzen der Fettsäure einzusetzen.

Schließlich hat es sich als günstig erwiesen, wenn man insbesondere bei stark viskosen Massen einen blasenfreien Stift erhalten will, die Stifthülsen unter Verdrängung der Luft mit Kohlendioxid auszublasen bzw. zu spülen.

Nach dem Erkalten der Masse erhält man einen weichabreibbaren Klebestift, der auf die verschiedensten Unterlagen aufgetragen werden kann und sich zum Verkleben von Papier oder auch Folien aus verschiedenen Metallen und dergleichen eignet. Es werden mit dem aufgetragenen Klebstoff keine erhärtenden Verklebungen gemäß dem Stand der Technik erhalten, sondern dauerklebrige Schichten erzeugt, welche eine spätere Trennung und ein erneutes Zusammenfügen erlauben.

Schließlich kann bei geeigneter Wahl der Komponenten zudem bei wenig geleimten Papieren die Migration des Klebstoffs auf ein Minimum herabgedrückt werden. Ferner eignen sich die dauerhaftklebrigen Schichten auch zum Verbinden von Kunststoffen mit Papier bzw. von mit Kunststoffen beschichteten Folien oder Papieren.

. . .

0188809
HENKEL KGaA
ZR-FE/Patente

## Beispiel 1

In einem mit Rührer und Rückflußkühler sowie Heizmöglichkeit ausgestatteten 250 ml fassenden Rundkolben wurden 70 g Wasser und 42 g Polyethylenglykol (Molmasse 600) vorgelegt, darin 5 g Myristinsäure durch Rühren verteilt und anschließend 2 g 50 %ige Natronlauge zugefügt und unter weiterem Rühren auf 80 °C erwärmt. Nachdem sich eine klare Lösung gebildet hatte, wurden 22 g Polyvinylpyrrolidon mit einem K-Wert 30 sowie 9 g Polyvinylpyrrolidon (K-Wert 90) unter Rühren eingestreut und die Temperatur auf 95 °C erhöht. Nachdem Polyvinylpyrrolidon vollständig gelöst war, füllte man die erhaltene Menge in die bekannten Hülsen für Klebestifte ab.

Nach dem Erkalten auf Zimmertemperatur wurde ein formstabiler Stift erhalten, mit dem auf Schreibmaschinenpapier durch Aufstreichen eine dauerklebrige Haftschicht aufgetragen wurde. Die damit hergestellten Verklebungen ließen sich nach einer Woche und dreiwöchiger Lagerzeit wieder trennen.

Mit den gleichen Klebestiften wurde auf Aluminium- und auf Kupferfolien eine Haftklebeschicht aufgetragen und damit Schreibmaschinenpapier verklebt. Es wurden praktisch die gleichen Eigenschaften beobachtet, wie bei Verklebungen von Papier mit Papier wie vorstehend beschrieben.

## Beispiele 2 bis 7

In gleicher Weise wie vorstehend beschrieben, wurden beim Abreiben dauerhaftklebrige Schichten abgebende Stifte hergestellt, wobei die angegebenen Zahlen Gewichts-

. . .

prozente sind, während unter der Nummer des Beispiels selbst das Gewichtsverhältnis von Polyvinylpyrrolidon (= PVP) zu Polyethylenglykol (= Polyol) zu finden ist. Es wurden zwei Sorten von Polyglykol eingesetzt, die durch ihre Molekularmasse (Zahlenmittel  600; 400) gekennzeichnet sind. Die PVP-Sorten sind durch ihren K-Wert nach Fikentscher charakterisiert. Die Natronlauge war 50 gewichtsprozentig.

| Beispiel | 2 | 3 | 4 | 5 | 6 | 7 |
|---|---|---|---|---|---|---|
| PVP:Polyol | 1 : 1 | 1 : 1 | 1 : 1,2 | 1 : 1,5 | 1 : 1,75 | 1 : 2,9 |
| Polyol  400 | – | 23,50 | – | – | 30,00 | 35,00 |
| Polyol  600 | 24,75 | – | 27,00 | 29,50 | – | – |
| PVP K 30 | 17,38 | – | 17,00 | 14,00 | – | – |
| PVP K 90 | 7,37 | 23,50 | 5,50 | 6,00 | 17,00 | 12,00 |
| Natronlauge | 1,68 | 1,68 | 1,68 | 1,68 | 1,68 | 1,68 |
| Myristinsäure | 4,35 | 4,32 | 4,35 | 4,35 | 4,32 | 4,32 |
| Wasser | 44,47 | 47,00 | 44,47 | 44,47 | 47,00 | 47,00 |

Alle Stifte gemäß Beispiele 1 bis 7 hatten bei normaler Zimmertemperatur (20 bis 22 °C) eine Druckfestigkeit von 4,0 bis 5,0 kp/16 mm ⌀.

. . .

## Patentansprüche

1. Formstabile, weichabreibbare Klebestifte, die eine dauerklebrige wieder trennbare Klebeschicht liefern, bestehend aus einem formstabilen Gel aus dem Natriumsalz einer aliphatischen Monocarbonsäure mit 8 bis 22, insbesondere 14 bis 18 Kohlenstoffatomen in Wasser, gegebenenfalls unter Zusatz von mit Wasser mischbaren organischen Lösungsmitteln als Gerüstsubstanz und wasserlöslichen mit Seifengel verträglichen Klebstoffen sowie gegebenenfalls üblichen Hilfsstoffen, wobei bezogen auf 100 Gewichtsteile des wasserlöslichen Klebstoffs 80 bis 400 Gewichtsteile, insbesondere 100 bis 300 Gewichtsteile eines wasserlöslichen Polyetherglykols einer Molekularmasse zwischen etwa 250 und 2 000 (Zahlenmittel) vorhanden sind.

2. Klebestifte nach Anspruch 1, dadurch gekennzeichnet, daß sie als wasserlösliche Klebstoffe Polyvinylalkohol, Dextrin, wasserlösliche Celluloseether, insbesondere heißwasserlösliche nichtionogene Celluloseether und/oder Polyvinylpyrrolidon enthalten.

3. Klebestifte nach Ansprüchen 1 und 2, dadurch gekennzeichnet, daß als Klebstoff Polyvinylpyrrolidon eines K-Wertes zwischen 30 und 90 eingesetzt wird und auf 100 Teile des Polyvinylpyrrolidons 100 bis 300 Gewichtsteile eines wasserlöslichen Polyethylenglykols einer Molekularmasse zwischen 300 und 1 200 (Zahlenmittel) vorhanden sind.

. . .

4. Klebestifte nach Ansprüchen 1 bis 3, dadurch gekennzeichnet, daß als gelbildende Monocarbonsäure das Natriumsalz von Myristinsäure, Palmitinsäure, Stearinsäure bzw. Gemische dieser Salze in einer Menge von 2 bis 6 Gewichtsprozent, bezogen auf den gesamten Klebestift als Gelbildner eingesetzt werden.

5. Verfahren zur Herstellung von Klebestiften gemäß Ansprüchen 1 bis 4, dadurch gekennzeichnet, daß man die zur Stiftbildung notwendigen Komponenten miteinander mischt und auf Temperaturen oberhalb von 60 $^{\circ}$C, insbesondere oberhalb von 80 $^{\circ}$C erwärmt, bis eine optisch homogene Masse entstanden ist und diese ohne mechanische Beeinflussung unter Gelbildung abkühlen läßt.

6. Verfahren nach Anspruch 5, dadurch gekennzeichnet, daß man die zur Stiftbildung notwendigen Komponenten auf Temperaturen zwischen 80 und 100 $^{\circ}$C erwärmt und die erhaltene homogene Masse in Hülsen abfüllt und dort unter Ausbildung der Gelstruktur erkalten läßt.

7. Verfahren nach Ansprüchen 5 und 6, dadurch gekennzeichnet, daß man vor dem Befüllen mit der heißen Klebstoffmasse die Stifthülsen unter Verdrängung der Luft mit Kohlendioxid spült bzw. ausbläst.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | DE-A-1 817 985 (HENKEL)<br><br>* Anspruch; Seite 3, zweiter Absatz; Seite 4, dritter Absatz; Seite 8, Beispiel 1 *<br><br>--- | 1,2,4-6 | C 09 J 3/00 |
| A | DE-A-2 204 482 (NIPPON GOHSEI)<br>* Ansprüche 1,3; Seite 6, vierter Absatz; Seite 14, Beispiel 8 *<br><br>--- | 1,2 | |
| A | WORLD SURFACE COATINGS ABSTRACTS, Band 50, Nr. 423, September 1977, Seite 1104, Nr. 5823, Oxford, GB; & JP - B - 77 005 335 (KONISHI CO.) 12.02.1977<br><br>--- | 1,2 | |
| A | DE-A-2 613 935 (HENKEL)<br>* Ansprüche *<br><br>----- | 7 | RECHERCHIERTE SACHGEBIETE (Int. Cl.4)<br><br>C 09 J |

Der vorliegende Recherchenbericht wurde für alle Patentansprüche erstellt.

| Recherchenort<br>DEN HAAG | Abschlußdatum der Recherche<br>16-04-1986 | Prüfer<br>GIRARD Y.A. |
|---|---|---|

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03.82